# DEMANDE DE BREVET EUROPEEN

(11) **EP 4 219 246 A1**
(43) Date de publication de la demande: **02.08.2023**
(21) Numéro de dépôt: 23152965.2
(22) Date de dépôt: 23.01.2023
(51) Int. Cl.: B60R 13/04

(54) **VÉHICULE DOTÉ D'UN ENJOLIVEUR DE PAVILLON AYANT UN MONTAGE SIMPLIFIÉ**

(30) Priorité: 26.01.2022 FR 2200674
(71) Demandeur: Renault s.a.s, 92100 Boulogne Billancourt (FR)
(72) Inventeur: DULA, Adrian, 077145 Ilfov (RO)

(57) **Abrégé**

véhicule (1) comprenant un pavillon (2), deux côtés de caisses (3) et au moins un enjoliveur (4) de pavillon monté entre au moins un côté de caisse et le pavillon pour masquer une rainure apparaissant entre ledit au moins un côté de caisse et ledit pavillon.

Selon l'invention, l'enjoliveur de pavillon comprend au moins une agrafe d'extrémité (8) présentant deux parois parallèles (11, 12), et le pavillon comprend une protubérance (17) s'étendant vers le haut dans un plan vertical et longitudinal XZ du véhicule, l'enjoliveur de pavillon étant monté sur le véhicule de sorte que les deux parois parallèles de l'agrafe d'extrémité encadrent la protubérance suivant un axe longitudinal X du véhicule pour empêcher tout mouvement dudit enjoliveur de pavillon le long dudit axe longitudinal X.

## Description

### Domaine Technique de l'invention

La présente invention concerne un véhicule doté d'un enjoliveur de pavillon ayant un montage simplifié.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

### État de la technique

Certains véhicules comprennent généralement un pavillon qui s'étend dans un plan sensiblement horizontal XY, et un côté de caisse s'étendant dans un plan sensiblement vertical et longitudinal X du véhicule. Le terme « sensiblement vertical » signifie « vertical à plus ou moins 20°». La jonction entre ces deux éléments sur le véhicule laisse apparaitre une rainure ou gouttière disgracieuse s'étendant suivant un axe longitudinal X et horizontal du véhicule, qu'il convient de masquer au moyen d'un enjoliveur pour améliorer le rendu visuel dudit véhicule. Cet enjoliveur masque complètement cette rainure, tout en assurant une certaine continuité visuelle entre une surface externe du pavillon et une surface externe du côté de caisse.

Or, actuellement, la fixation de cet enjoliveur est réalisée au moyen d'un support agrafe et d'un trou de centrage réalisé dans le pavillon, engendrant des problèmes d'étanchéité sur le véhicule. De plus, un tel support agrafe qui est nécessaire à la fixation de chaque enjoliveur sur le véhicule, entraine des surcoûts de fabrication, ainsi qu'un temps de montage supplémentaire.

### Présentation de l'invention

Un véhicule selon l'invention, possède un enjoliveur de pavillon dont le montage s'affranchit des inconvénients rencontrés dans les véhicules de l'état de la technique.

L'invention a pour objet un véhicule comprenant un pavillon, deux côtés de caisses et au moins un enjoliveur de pavillon monté entre au moins un côté de caisse et le pavillon pour masquer une rainure apparaissant entre ledit au moins un côté de caisse et ledit pavillon.

### Résumé de l'invention

Selon l'invention, l'enjoliveur de pavillon comprend au moins une agrafe d'extrémité présentant deux parois parallèles, et le pavillon comprend une protubérance s'étendant vers le haut dans un plan vertical et longitudinal XZ du véhicule, l'enjoliveur de pavillon étant monté sur le véhicule de sorte que les deux parois parallèles de l'agrafe d'extrémité encadrent la protubérance suivant un axe longitudinal X du véhicule pour empêcher tout mouvement dudit enjoliveur de pavillon le long dudit axe longitudinal X. De cette manière, en prolongeant simplement et de façon astucieuse le pavillon avec une protubérance, l'enjoliveur de pavillon est bloqué en translation suivant un axe longitudinal X du véhicule grâce à la présence d'au moins une agrafe d'extrémité venant enserrer cette protubérance. Avantageusement, l'agrafe d'extrémité possédant les deux parois parallèles venant de part et d'autre de la protubérance, est fixe sur l'enjoliveur. De façon préférentielle, l'enjoliveur est allongé et comprend d'autres agrafes de fixation conventionnelles équitablement réparties le long d'un axe longitudinal dudit enjoliveur. De façon avantageuse, l'enjoliveur et l'agrafe d'extrémité sont réalisés en matière plastique. La protubérance peut par exemple être constituée par une patte plane et de faible épaisseur possédant une longueur finie suivant un axe longitudinal X du véhicule. Préférentiellement, le véhicule comprend deux enjoliveurs de pavillon parallèles venant s'insérer entre le pavillon et chaque côté de caisse. Le pavillon s'étend dans un plan horizontal lorsque le véhicule repose sur un sol horizontal, et chaque côté de caisse s'étend dans un plan sensiblement vertical et longitudinal XZ du véhicule, le terme « sensiblement » est appliqué au terme «vertical» et signifie «vertical à plus ou moins 20°». Avantageusement, l'agrafe d'extrémité est préalablement fixée à l'enjoliveur de pavillon avant que ledit enjoliveur soir arrimé au véhicule. Selon une variante de réalisation d'un véhicule selon l'invention, chaque enjoliveur de pavillon est allongé est possède deux agrafes d'extrémité placées aux deux extrémités dudit enjoliveur de pavillon considérées suivant un axe longitudinal de celui-ci.

Selon une caractéristique possible de l'invention, les deux parois parallèles de l'agrafe d'extrémité viennent chacune en appui contre la protubérance. De cette manière, il n'existe aucun jeu entre l'agrafe d'extrémité et la protubérance, et l'enjoliveur ne peut occuper qu'une seule position sur le véhicule sans possibilité d'être translaté suivant un axe longitudinal X du véhicule.

Selon une caractéristique possible de l'invention, la protubérance est délimitée par un premier bord d'extrémité avant et par un deuxième bord d'extrémité arrière, lesdits deux bords d'extrémité étant verticaux et alignés suivant un axe longitudinal X du véhicule, chaque paroi parallèle de l'agrafe d'extrémité venant en appui contre l'un desdits deux bords d'extrémité.

Selon une caractéristique possible de l'invention les deux parois parallèles de l'agrafe d'extrémité s'étendent chacune dans un plan vertical et transversal Y du véhicule. De cette manière, les deux parois parallèles de l'agrafe d'extrémité s'étendent perpendiculairement à la protubérance, et peuvent pleinement exercer leur fonction de butées d'arrêt.

Selon une caractéristique possible de l'invention, la protubérance se termine par un bord supérieur replié, et l'agrafe d'extrémité possède au moins une patte déformable s'étendant sous ledit bord supérieur replié en venant en appui contre celui-ci. La patte déformable de l'agrafe qui vient se loger sous le bord replié supérieur de la protubérance, constitue un moyen permettant de figer la position de l'agrafe sur le véhicule suivant un axe vertical Z. En effet, le bord supérieur replié de la protubérance constitue pour la patte déformable de l'agrafe d'extrémité une butée empêchant un retrait de ladite agrafe d'extrémité vers le haut.

L'invention a pour autre objet un enjoliveur de pavillon pour la réalisation d'un véhicule conforme à l'invention.

Selon l'invention, l'enjoliveur de pavillon comprend au moins une agrafe d'extrémité possédant deux parois parallèles destinée à coopérer avec une protubérance du pavillon pour empêcher tout mouvement dudit enjoliveur de pavillon le long d'un axe longitudinal X du véhicule. Ainsi, l'enjoliveur de pavillon doté de l'agrafe d'extrémité constitue un ensemble qui pourra directement venir s'arrimer au véhicule entre le pavillon et un côté de caisse dudit véhicule.

Selon une caractéristique possible d'un enjoliveur selon l'invention, l'enjoliveur est allongé et les deux parois parallèles de l'agrafe d'extrémité s'étendant perpendiculairement à un axe longitudinal dudit enjoliveur de pavillon, lesdites deux parois étant alignées suivant ledit axe longitudinal.

L'invention a pour autre objet un procédé de montage d'un enjoliveur de pavillon pour la réalisation d'un véhicule conforme à l'invention.

Selon l'invention, le procédé comprend les étapes suivantes :
- une étape de création d'une protubérance du pavillon s'étendant vers le haut suivant un plan vertical et longitudinal X du véhicule,
- une étape de fourniture d'un enjoliveur de pavillon comprenant au moins une agrafe d'extrémité possédant deus parois parallèles,
- une étape d'insertion de l'enjoliveur de pavillon dans le véhicule entre le pavillon et un côté de caisse, de sorte que les deux parois parallèles de l'agrafe d'extrémité viennent enserrer la protubérance en étant alignées suivant un axe longitudinal X du véhicule.

L'agrafe d'extrémité est préalablement fixée à l'enjoliveur avant que l'ensemble résultant ne soit fixé au véhicule. Grâce à la présence de la protubérance et des deux parois parallèles de l'agrafe d'extrémité de l'enjoliveur, un opérateur peut immédiatement et directement prépositionner l'enjoliveur de pavillon sur le véhicule en plaçant lesdites deux parois parallèles de l'agrafe d'extrémité de part et d'autre de la protubérance. L'opérateur n'a donc pas à se livrer à plusieurs ajustements de position de l'enjoliveur de pavillon sur le véhicule avant de trouver la position idéale.

Selon une caractéristique possible d'un procédé selon l'invention, l'étape d'insertion de l'enjoliveur de pavillon dans le véhicule s'effectue au moyen d'un mouvement de translation dudit enjoliveur de pavillon vers le bas.

Selon une caractéristique possible d'un procédé selon l'invention, durant l'étape d'insertion, au moins une patte de l'agrafe d'extrémité se déforme élastiquement en progressant sous un bord supérieur replié de la protubérance, avant de se relaxer brutalement pour se retrouver en butée contre ledit bord supérieur replié.

Une fois que l'enjoliveur de pavillon a été correctement prépositionné sur le véhicule entre le pavillon et un côté de caisse, il est translaté vers le bas pour être fixé au véhicule. Durant ce mouvement de translation vers le bas, la patte de l'agrafe d'extrémité se déforme élastiquement en venant en appui contre le bord supérieur replié de la protubérance. Lorsque le mouvement de translation vers le bas se termine, il arrive un instant où la patte n'est plus en appui contre ledit bord replié. Elle se relaxe alors instantanément pour reprendre sa forme initiale. Durant cette relaxation, une extrémité supérieure de la patte vient en appui par en-dessous contre le bord supérieur replié de la protubérance. Cette patte agit alors comme un organe de verrouillage de l'enjoliveur de pavillon suivant un axe vertical Z. Autrement dit, cette patte empêche toute translation vers le haut de l'enjoliveur, et donc tout retrait de celui-ci du véhicule.

Un véhicule selon l'invention présente l'avantage de posséder au moins un enjoliveur de pavillon solidement arrimé audit véhicule, en évitant d'avoir à modifier en profondeur la structure du véhicule comme c'est le cas actuellement avec la création d'un trou dans le pavillon. Il a de plus l'avantage de pouvoir être monté rapidement et facilement le long d'une chaine d'assemblage, car l'enjoliveur peut être directement bien prépositionné sur le véhicule sans qu'un opérateur n'ait à se livrer à plusieurs réajustements de position avant de trouver la bonne position.

### Présentation des figures

On donne ci-après, une description détaillée d'un mode de réalisation préféré d'un véhicule et d'un enjoliveur de pavillon selon l'invention, en se référant aux figures ci-après :
[Fig. 1] La figure 1 est une vue en perspective d'une zone supérieure d'un véhicule selon l'invention, montrant un enjoliveur de pavillon placé entre un côté de caisse et un pavillon,
[Fig. 2] La figure 2 est une vue de face d'une zone d'un pavillon d'un véhicule selon l'invention, montrant une protubérance destinée à coopérer avec une agrafe d'extrémité d'un enjoliveur de pavillon,
[Fig. 3] La figure 3 est une vue à 90° de la zone de pavillon de la figure 2,
[Fig. 4] La figure 4 est une vue de face d'une agrafe d'extrémité d'un enjoliveur de pavillon selon l'invention,
[Fig. 5] La figure 5 est une vue en perspective d'une zone supérieure d'un véhicule selon l'invention montrant le positionnement de l'agrafe d'extrémité de la figure 4, l'enjoliveur de pavillon ayant été volontairement effacé,
[Fig. 6] La figure 6 est une vue en perspective agrandie de la zone supérieure de la figure 5, l'agrafe d'extrémité ayant été volontairement coupée,
[Fig. 7] La figure 7 est une vue en perspective de la zone supérieure de la figure 6, montrant le positionnement de l'enjoliveur de pavillon couvrant une rainure.

### Description détaillée

Il est à noter que pour l'orientation des différentes pièces qui vont être décrites ci-après, il est supposé que le véhicule repose sur un sol horizontal.

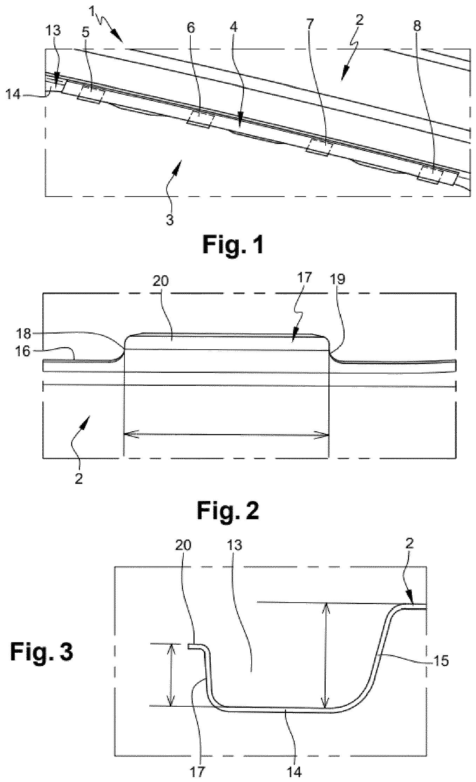

En se référant à la figure 1, un véhicule 1 selon l'invention comprend un pavillon 2 s'étendant dans un plan sensiblement horizontal XY, et deux côtés 3 de caisse, parallèles, s'étendant chacun dans un plan longitudinal et sensiblement vertical XZ dudit véhicule. L'expression « sensiblement vertical » signifie «vertical à plus ou moins 20°». Lorsque le pavillon 2 est monté dans le véhicule, il ménage avec chacun des deux côtés 3 de caisse, une rainure assimilable à une gouttière, s'étendant suivant un axe longitudinal X et horizontal du véhicule 1. Ces rainures sont disgracieuses et donnent l'impression que le véhicule a été monté avec approximation. Deux enjoliveurs 4 de pavillon sont alors prévus pour venir recouvrir ces deux rainures, afin d'améliorer l'esthétique du véhicule, en donnant l'impression d'une certaine continuité visuelle entre le pavillon 2 et le côté de caisse 2.

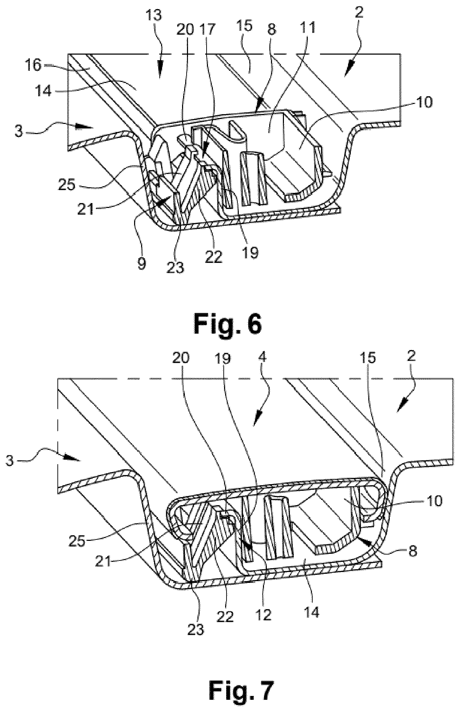

En se référant aux figures 1 et 7, un enjoliveur 4 de pavillon est une pièce allongée, qui est préférentiellement réalisée en matière plastique et qui vient s'insérer dans la rainure afin de masquer celle-ci.

En se référant à la figures 1, l'enjoliveur 4 de pavillon comprend plusieurs agrafes 5, 6, 7 de fixation équitablement réparties le long d'un axe longitudinal de cet enjoliveur 4, ainsi qu'une agrafe d'extrémité 8 de fixation et de centrage. Sur l'exemple de la figure 1, l'enjoliveur 4 de pavillon comprend trois agrafes de fixation 5, 6, 7 et une agrafe d'extrémité 8 de fixation et de centrage, lesdites quatre agrafes 5, 6, 7, 8 étant régulièrement espacées le long d'un axe longitudinal de cet enjoliveur. Il est à préciser que les agrafes de fixation 5, 6, 7 et l'agrafe d'extrémité 8 sont fixées à l'enjoliveur de pavillon 4 par tout moyen, comme par exemple par clippage ou par collage. Les agrafes de fixation 5, 6, 7 étant conventionnelles, elles ne seront donc pas plus détaillées dans la présente description.

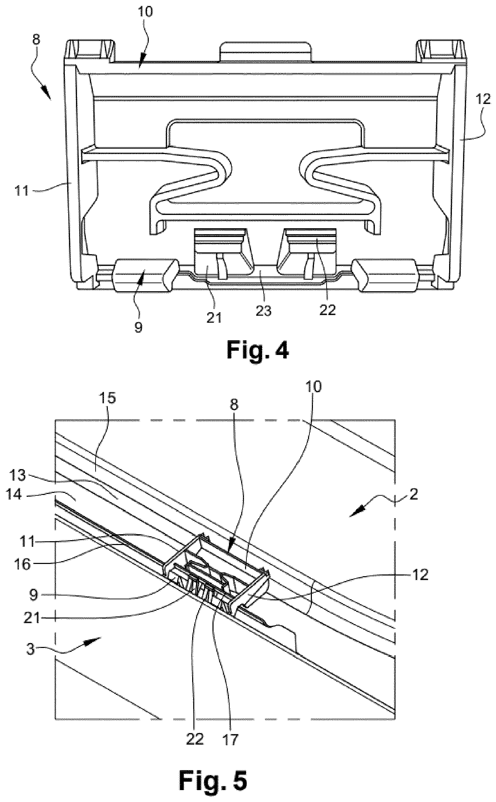

En se référant aux figures 4 et 5, l'agrafe d'extrémité 8 de fixation et de centrage est notamment délimitée par deux parois 9, 10 longitudinales parallèles et par deux parois latérales 11, 12 parallèles, lesdites deux parois longitudinales 9, 10 étant perpendiculaires auxdites deux parois latérales 11, 12. Ces quatre parois 9, 10, 11, 12 confèrent à l'agrafe d'extrémité 8, une forme rectangulaire, les parois longitudinales 9, 10 étant plus longues que les deux parois latérales 11, 12. L'une 9 des deux parois longitudinales comprend deux pattes parallèles déformables 21, 22 inclinées vers le centre de l'agrafe d'extrémité 8.

Plus précisément, en se référant aux figures 6 et 7, ces deux pattes déformables 21, 22 sont alignées le long de la paroi longitudinal 9 et prennent naissance sur un bord inférieur 23 de ladite paroi longitudinale 9 et s'étendent vers le haut en direction du centre de l'agrafe d'extrémité 8. Ces deux pattes déformables 21, 22 sont chacune inclinées par rapport à un axe vertical.

En se référant aux figures 2, 3, 5 et 6, le pavillon 2 est sensiblement de forme rectangulaire et est délimité par deux gorges 13 parallèles, s'étendant suivant un axe longitudinal X du véhicule. De cette manière, chaque gorge 13 présente un fond 14 et est délimitée par un bord interne 15 s'étendant vers le haut dans un plan longitudinal et sensiblement vertical XZ du véhicule, et par un bord externe 16 s'étendant vers le haut dans un plan longitudinal et sensiblement vertical XZ du véhicule. Le bord externe 16 de la gorge 13 matérialise également un bord externe du pavillon 2.

En se référant aux figures 2, 3, 5 et 6, le bord externe 16 de la gorge comprend une protubérance 17 sous la forme d'une languette plane et de faible épaisseur prolongeant ledit bord externe 16 vers le haut. Cette languette 17 s'étend dans un plan longitudinal et vertical XZ du véhicule et possède une longueur finie, avantageusement de plusieurs centimètres, la longueur étant la dimension de la protubérance 17 considérée suivant un axe longitudinal X du véhicule. La protubérance 17 est délimitée par un premier bord d'extrémité avant 18 et par un deuxième bord d'extrémité arrière 19, lesdits deux bords d'extrémité 18, 19 étant sensiblement verticaux et alignés suivant un axe longitudinal X du véhicule 1. La protubérance 17 se termine par un bord supérieur replié 20, s'étendant dans un plan sensiblement horizontal, vers l'extérieur du pavillon 2. Préférentiellement la hauteur du bord externe 16 est inférieure à celle du bord interne 15, et la protubérance 17 est située à une extrémité arrière du pavillon 2.

En se référant à la figure 5, chaque enjoliveur 4 de pavillon est fixé au véhicule de sorte que les deux parois latérales 11, 12 parallèles de l'agrafe d'extrémité 8 viennent enserrer la protubérance 17 du pavillon, et de sorte que :
- l'une des deux parois latérales 11, 12 vienne en appui contre le premier bord d'extrémité avant 18 de la protubérance 17, et
- l'autre paroi latérale vienne en appui contre le deuxième bord d'extrémité arrière 19 de ladite protubérance 17.

En se référant aux figures 5, 6, 7, les deux pattes déformables 21, 22 de l'agrafe d'extrémité 8 sont placées sous le bord supérieur replié 20 de la protubérance 17, en venant en appui contre ledit bord replié 20. De cette manière, les deux pattes déformables 21, 22 empêchent toute translation vers le haut de l'enjoliveur 4 de pavillon et contribuent ainsi à maintenir ledit enjoliveur 4 contre le véhicule 1.

Un procédé de montage d'un enjoliveur 4 de pavillon sur un véhicule 1 selon l'invention, comprend les étapes suivantes :
- une étape de pré-positionnement de l'enjoliveur 4 de pavillon au-dessus de la rainure, de sorte que les deux parois latérales parallèles 11, 12 de l'agrafe d'extrémité 8 viennent encadrer la protubérance 17 du pavillon 1 en étant au contact de ladite protubérance 17, le long d'un axe longitudinal X du véhicule,
- une étape d'enfoncement de l'enjoliveur 4 de pavillon dans la rainure au moyen d'un mouvement de translation vers le bas dudit enjoliveur 4 de pavillon. Lors de ce mouvement, une partie de l'agrafe d'extrémité 8 vient se placer entre le bord interne 15 et le bord externe 16 de la gorge 13, tandis que la paroi longitudinale 9 comprenant les deux pattes déformables se retrouve à l'extérieur de la protubérance 17 en étant insérée entre ladite protubérance 17 et un bord relevé 25 du côté de caisse 3. Durant cet enfoncement, les deux parois latérales parallèles 11, 12 de l'agrafe d'extrémité 8 glissent le long du premier bord d'extrémité 18 avant et du deuxième bord d'extrémité arrière 19 de la protubérance 17, tandis que les deux pattes déformables 21, 22 se déforment progressivement en étant au contact du bord supérieur replié 20 de la protubérance 17,
- une étape de poursuite de l'enfoncement de l'enjoliveur de pavillon 4 jusqu'à ce que les deux pattes déformables 21, 22 ne soient plus en appui contre le bord supérieur replié 20 de la protubérance 17. Elles se relâchent alors brutalement pour retrouver leur forme initiale relaxée, en venant en appui par en-dessous contre le bord supérieur replié 20 de la protubérance 17 empêchant tout retrait de l'enjoliveur de pavillon 4 au moyen d'un mouvement de translation vers le haut.

Il est à noter que les autres agrafes de fixation 5, 6, 7 de l'enjoliveur 4 de pavillon suivent le même mouvement que l'agrafe d'extrémité 8 en permettant un arrimage solide de l'enjoliveur 4 de pavillon sur le véhicule. Une fois que l'enjoliveur 4 de pavillon a été fixé au véhicule, il coiffe la rainure en la masquant totalement, améliorant ainsi le rendu visuel du véhicule 1.

Selon une variante de réalisation de l'invention, chaque enjoliveur 4 de pavillon comprend deux agrafes 8 d'extrémité placées aux extrémités dudit enjoliveur 4 de pavillon considérées le long d'un axe longitudinal de cet enjoliveur 4 de pavillon.

## Revendications

1. Véhicule (1) comprenant un pavillon (2), deux côtés de caisses (3) et au moins un enjoliveur (4) de pavillon monté entre au moins un côté de caisse (3) et le pavillon (2) pour masquer une rainure apparaissant entre ledit au moins un côté de caisse (3) et ledit pavillon (2), **caractérisé en ce que** l'enjoliveur (4) de pavillon comprend au moins une agrafe d'extrémité (8) présentant deux parois parallèles (11, 12), et **en ce que** le pavillon (2) comprend une protubérance (17) s'étendant vers le haut dans un plan vertical et longitudinal XZ du véhicule (1), l'enjoliveur (4) de pavillon étant monté sur le véhicule de sorte que les deux parois parallèles (11, 12) de l'agrafe d'extrémité (8) encadrent la protubérance (17) suivant un axe longitudinal X du véhicule pour empêcher tout mouvement dudit enjoliveur (4) de pavillon le long dudit axe longitudinal X.

2. Véhicule selon la revendication 1, **caractérisé en ce que** les deux parois parallèles (11, 12) de l'agrafe d'extrémité (8) viennent chacune en appui contre la protubérance (17).

3. Véhicule selon la revendication 2, **caractérisé en ce que** la protubérance (17) est délimitée par un premier bord d'extrémité avant (18) et par un deuxième bord d'extrémité arrière (19), et **en ce que** lesdits deux bords d'extrémité (18, 19) sont verticaux et alignés suivant un axe longitudinal X du véhicule, chaque paroi parallèle (11, 12) de l'agrafe d'extrémité (8) venant en appui contre l'un desdits deux bords d'extrémité (18, 19).

4. Véhicule selon l'une quelconque des revendications 1 à 3, **caractérisé en ce que** les deux parois parallèles (11, 12) de l'agrafe d'extrémité (8) s'étendent chacune dans un plan vertical et transversal Y du véhicule.

5. Véhicule selon l'une quelconque des revendications 1 à 4, **caractérisé en ce que** la protubérance (17) se termine par un bord supérieur replié (20), et **en ce que** l'agrafe d'extrémité (8) possède au moins une patte déformable (21, 22) s'étendant sous ledit bord supérieur replié (20) en venant en appui contre celui-ci.

6. Enjoliveur (4) de pavillon pour la réalisation d'un véhicule (1) conforme à l'une quelconque des revendications 1 à 5, **caractérisé en ce qu'**il comprend au moins une agrafe d'extrémité (8) possédant deux parois parallèles (11, 12) destinée à coopérer avec une protubérance (17) du pavillon (2) pour empêcher tout mouvement dudit enjoliveur de pavillon (4) le long d'un axe longitudinal X du véhicule.

7. Enjoliveur de pavillon selon la revendication 6, **caractérisé en ce qu'**il est allongé, et **en ce que** les deux parois parallèles (11, 12) de l'agrafe d'extrémité (8) s'étendent perpendiculairement à un axe longitudinal dudit enjoliveur de pavillon (4), lesdites deux parois (11, 12) étant alignées suivant ledit axe longitudinal.

8. Procédé de montage d'un enjoliveur (4) de pavillon pour la réalisation d'un véhicule (1) conforme à l'une quelconque des revendications 1 à 7, **caractérisé en ce qu'**il comprend les étapes suivantes :
- une étape de création d'une protubérance (17) du pavillon (2) s'étendant vers le haut suivant un plan vertical et longitudinal X du véhicule,
- une étape de fourniture d'un enjoliveur (4) de pavillon comprenant au moins une agrafe d'extrémité (8) possédant deus parois parallèles (11, 12),
- une étape d'insertion de l'enjoliveur (4) de pavillon dans le véhicule entre le pavillon (2) et un côté de caisse (3), de sorte que les deux parois parallèles (11, 12) de l'agrafe d'extrémité (8) viennent enserrer la protubérance (17) en étant alignées suivant un axe longitudinal X du véhicule.

9. Procédé de montage selon la revendication 8, **caractérisé en ce que** l'étape d'insertion de l'enjoliveur (4) de pavillon dans le véhicule s'effectue au moyen d'un mouvement de translation dudit enjoliveur (4) de pavillon vers le bas.

10. Procédé de montage selon la revendication 9, **caractérisé en ce que** durant l'étape d'insertion, au moins une patte (21, 22) de l'agrafe d'extrémité (8) se déforme élastiquement en progressant sous un bord supérieur replié (20) de la protubérance (17), avant de se relaxer brutalement pour se retrouver en butée contre ledit bord supérieur replié (20).
